# EUROPÄISCHE PATENTSCHRIFT

(11) **EP 2 119 599 B1**
(45) Veröffentlichungstag und Bekanntmachung des Hinweises auf die Patenterteilung: **04.01.2012**
(21) Anmeldenummer: 09006064.1
(22) Anmeldetag: 04.05.2009
(51) Int. Cl.: F24F 13/15

(54) **Befestigungseinrichtung zum Befestigen von Bauteilen**
Attachment device for attaching components
Dispositif de fixation destiné à fixer des composants

(30) Priorität: 13.05.2008 DE 102008023275; 09.12.2008 DE 102008060872
(43) Veröffentlichungstag der Anmeldung: 18.11.2009
(73) Patentinhaber: Tormaxx GmbH, 41199 Mönchengladbach (DE)
(72) Erfinder: Koch, Hubert, 41199 Mönchengladbach (DE)
(74) Vertreter: Castell, Klaus

(56) Entgegenhaltungen:
- EP-A- 1 336 535
- WO-A-03/033297
- JP-A- 8 276 793
- US-A- 5 339 638
- US-A- 5 979 724

## Beschreibung

Die Erfindung betrifft eine Befestigungsvorrichtung und ein Verfahren zur Befestigung von Gegenständen in Fahrzeugen.

Befestigungsvorrichtungen zur Befestigung von Gegenständen in Fahrzeugen sind zahlreich aus dem Stand der Technik bekannt.

Eine Gruppe sind Befestigungsvorrichtungen für Navigationsgeräte oder Mobiltelefone, die an der Mittelkonsole oder dem Armaturenbrett festgeschraubt werden können. Diese sind zum einen aufwendig zu befestigen und zum anderen nur schwer wieder zu entfernen. Die Mittelkonsole oder das Armaturenbrett bleiben mit den Einschraublöchern der Befestigungsschrauben beschädigt zurück.

Eine beschädigungslose Befestigung von Kleingeräten wird häufig durch Saugnäpfe vorgenommen. Die Befestigung mit Saugnapf kann dann durch den Saugnapf an einer Scheibe oder auf glatten Stellen auf dem Armaturenbrett erfolgen. Die Befestigung mit einem Saugnapf hat häufig den Nachteil, dass die Saugkraft nach einiger Zeit nachlässt und die Befestigungsvorrichtung herunterfällt.

Die gattungbildende 5,979,724 A offenbart eine Befestigungseinreichung zur Befestigung von Gegenständen in Fahrzeugen, wobei zwei flexible Befestigungsgurte verkürzt werden und zwei sich an deren Enden befindliche Haken dadurch auf ein Lüftungsgitter gezogen werden und so in dieses eingreifen.

Die JP 08 27 67 93 A zeigt ebenfalls eine Befestigungsvorrichtung zur Befestigung von Gegenständen in Fahrzeugen, wobei eine Befestigungskralle so ausgestaltet ist, dass diese als Klemme auf ein Lüftungsgitter aufgeschoben werden kann.

Die WO 03/033 297 A zeigt eine Befestigungsvorrichtung, bei der die Befestigung durch Drehen der Befestigungskralle in eine Position rechtwinklig zum Lüftungsgitter erfolgt.

In der US 5,339,638 A ist eine in der Funktionsweise der US 5,979,274 A entsprechende Befestigungsvorrichtung offenbart. Hier ist jedoch nur ein Befestigungsgurt vorgesehen.

Ziel vorliegender Erfindung ist es daher, eine verbesserte Befestigungsvorrichtung zum Befestigen von Gegenständen in Fahrzeugen zur Verfügung zu stellen.

Diese Aufgabe wird durch eine Befestigunssvorrichtung zur Befestigung von Gegenständen in Fahrzeugen nach dem Anspruch 1 gelöst.

Dadurch ist es möglich, die Befestigungsvorrichtung mittels der Kralle an Stellen zu befestigen, an denen die Kralle nicht mehr direkt zugänglich ist wie beispielsweise in Lüftungsgittern auf dem Armaturenbrett. Die Befestigungskralle wird in die Lüftungsöffnung eingeführt und dann mittels der auf der gegenüberliegenden Seite des Trägers liegenden Einstelleinrichtung festgestellt. So wird die Kralle in der nunmehr durch den Träger verdeckten Lüftungsöffnung verankert.

Vorteilhaft ist, wenn die Befestigungskralle schwenkbar gelagert ist. Dadurch können Parallelitätsabweichungen automatisch ausgeglichen werden.

Die Befestigungskralle kann mehrere Hebel aufweisen. So wird die Befestigungswirkung erhöht.

Dem selben Ziel dienend können die Hebel mehrere Zähne aufweisen.

Vorteilhafterweise sind diese Zähne unterschiedlich geformt. Diese Zähne können auf den jeweilig fahrzeugspezifischen Lüftungseinsatz abgestimmt werden und verbessern dadurch die Befestigung.

Um den Halt zu verbessern kann die Befestigungsvorrichtung mehrere Befestigungskrallen aufweisen.

Von Vorteil ist, wenn die Befestigungskrallen gegenüberliegend angeordnet sind. Durch eine solche Anordnung erfolgt die Befestigung der Vorrichtung stabil und ein Verrutschen in der Lüftungsöffnung ist weniger wahrscheinlich.

Die Befestigungskrallen können auch lateral beweglich sein. Dieser Aufbau eignet sich insbesondere für eckige Lüftungsöffnungen.

Vorteilhafterweise ist die Befestigungsvorrichtung formschlüssig und/oder kraftschlüssig in einem Lüftungsgitter befestigbar. So wird ein Verrutschen oder Herausrutschen der Befestigungsvorrichtung erschwert.

Die Krallenposition kann fixierbar sein. So wird, wenn die Krallen einmal eingestellt sind, ein Verrutschen der Krallen verhindert. Diese halten die Befestigungsvorrichtung auch beim Einwirken von Kräften von außen sicher in Position.

Je nach Anwendungsfall kann die Befestigungsvorrichtung zumindest teilweise mit PUR-Schaum beschichtet sein. Eine solche Beschichtung führt insbesondere im Fahrzeug zu einem geringeren Verletzungsrisiko des Benutzers der Befestigungsvorrichtung, indem sie scharfe Ecken und Kanten der Befestigungsvorrichtung weich überdeckt. Dies verringert insbesondere die Verletzungsgefahr bei einem Unfall.

Vorteilhafterweise weist der PUR-Schaum eine Härte von 40 bis 60° Shore auf. In diesem Härtebereich wird bei ausreichender Haltbarkeit das Verletzungsrisiko minimiert.

Die Einstelleinrichtung kann schließlich einen Kugelkopf aufweisen, sodass an diesem Kleingeräte wie ein Navigationsgerät oder ein Mobiltelefon befestigt werden können.

Die Erfindung betrifft zudem ein Verfahren zum Befestigen einer Einrichtung in einem Kraftfährzeug nach dem Anspruch 13.

Nachfolgend wird die Erfindung an Hand eines Ausführungsbeispiels unter Bezugnahme auf die Zeichnungen näher erläutert. Hierin zeigen
- Figur 1: eine dreidimensionale Draufsicht auf eine Befestigungsvor- richtung zur Befestigung von Gegenständen in Fahrzeugen,
- Figur 2: eine schematische Seitenansicht der in Figur 1 gezeigten Be- festigungsvorrichtung,
- Figur 3: eine Unteransicht der Befestigungsvorrichtung und
- Figur 4: eine Draufsicht der Befestigungsvorrichtung.

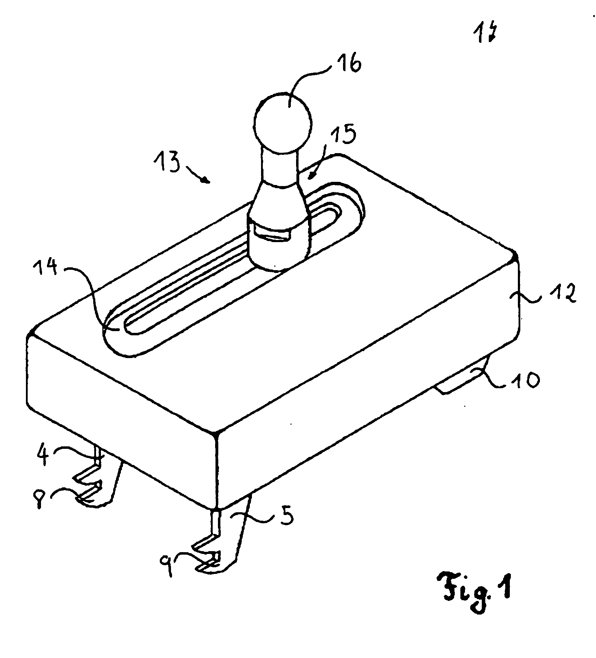

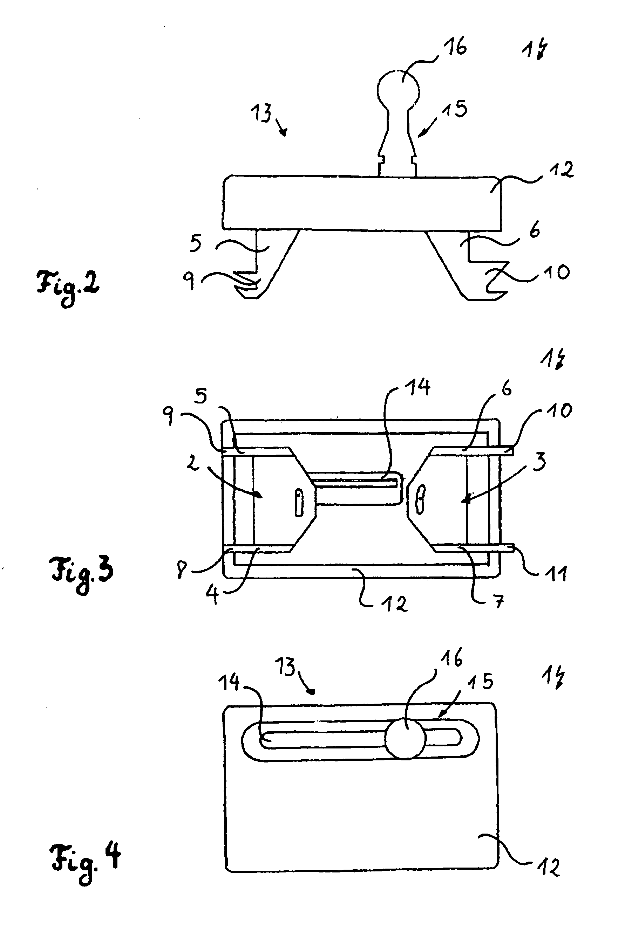

Die Befestigungsvorrichtung 1 in Figur 1 besteht im Wesentlichen aus Befestigungskrallen 2 und 3 (siehe Figur 3) die an einem Träger 12 angeordnet sind. Diese weisen je zwei Hebel (4, 5 und 6, 7) auf, die ihrerseits wiederum jeweils Zähne (8, 9 und 10, 11) aufweisen.

Auf der den Krallen 2 und 3 gegenüberliegenden Seite des Trägers 12 ist eine Einstelleinrichtung 13 angeordnet. Die Einstelleinrichtung 13 besteht im Wesentlichen aus einer Schiene 14, in der der Verstellhebel 15 verschiebbar angeordnet ist. Wird dieser Verstellhebel 15 verschoben, bewegen sich die Krallen 2 und 3 auseinander oder zusammen. Durch Verdrehen des Verstellhebels 15 kann dessen Position und damit die Krallenposition fixiert werden. Der Verstellhebel 15 weist zudem einen Kugelkopf 16 auf, an dem Kleingeräte wie ein Handy oder ein Navigationsgerät mittels einer entsprechenden Aufnahme befestigt werden können.

Der Grundkörper des Trägers 12 ist an seiner Oberfläche mit PUR-Schaum beschichtet. Dieser weist eine Härte von mindestens 50 °Shore auf.

Die schematische Darstellung der Befestigungsvorrichtung 1 in Figur 2 zeigt die Hebel 5 und 6 mit dem Zähnen 9 und 10 an dem Träger 12 mit dem Verstellhebel 15 mit Kugelkopf 16.

Die Zähne 9 und 10 und 13 weisen eine unterschiedliche Formgebung auf, die an den Lüftungsschacht fahrzeugspezifisch angepasst ist.

Beim Träger 1 in der Unteransicht in Figur 3 sind die Befestigungskrallen 2 und 3 mit den vier Hebeln (4,5.6 und 7) samt Zähnen (8,9,10 und 11) sowie der Träger 12 mit der Schiene 14 sichtbar. Während die rechte Befestigungskralle 3 in ihrer Position festgelegt ist, kann die linke Befestigungskralle 2 mit der Einstellvorrichtung 13 (nicht sichtbar) verschoben werden. Hierfür wird die linke Kralle 2 mittels des Verstellhebels (hier nicht sichtbar) auf der Oberseite des Trägers in der Schiene 14 bewegt. Die Befestigungskrallen 2 und 3 sind beide schwenkbar gelagert, was einen automatischen Ausgleich von Parallelitätsabweichungen ermöglicht.

In der Draufsicht auf die Befestigungsvorrichtung 1 in Figur 4 ist der Träger 12 mit der Schiene 14, in der der Verstellhebel 15 mit Kugelkopf 16 läuft, sichtbar.

## Patentansprüche

1. Befestigungsvorrichtung (1) zur Befestigung von Gegenständen an einem Lüftungsgitter in Fahrzeugen, mit mindestens zwei Befestigungskrallen (2, 3), die an einem Träger (12) angeordnet sind, wobei auf der den Befestigungskrallen (2, 3) gegenüberlügenden Seite des Trägers (12) eine Einstelleinrichtung (15) angeordnet ist, mit der die Position einer Befestigungskralle (2) relativ zum Träger einstellbar ist, **dadurch gekennzeichnet, dass** wenn der Verstellhebel (15) verschoben wird, sich die zwei Befestigungskrallen (2, 3) auseinander oder zusammenbewegen, wobei die eine Befestigungskralle (2) mit der Einstelleinrichtung (13) verschiebbar ist, während die andere Befestigungskralle (3) in ihrer Position festgelegt ist.

2. Befestigungsvorrichtung nach Anspruch 1, ***dadurch gekennzeichnet, dass*** die Befestigungskralle zur Bewegungsrichtung der Befestigungskralie schwenkbar gelagert ist.

3. Befestigungsvorrichtung nach Anspruch 1 oder 2, ***dadurch gekennzeichnet, dass*** die Befestigungskralle mehrere Hebel aufweist.

4. Befestigungsvorrichtung nach Anspruch 3, ***Dadurch gekennzeichnet, dass*** die Hebel Zähne aufweisen.

5. Befestigungsvorrichtung nach Anspruch 3 oder 4, ***dadurch gekennzeichnet, dass*** die Zähne unterschiedlich geformt sind.

6. Befestigungsvorrichtung nach einem der vorhergehenden Ansprüche, ***dadurch gekennzeichnet, dass*** sie mehrere Befestigungskrallen aufweist.

7. Befestigungsvorrichtung nach Anspruch 6, ***dadurch gekennzeichnet, dass*** die Befestigungskrallen gegenüberliegend angeordnet sind.

8. Befestigungsvorrichtung nach einem der vorhergehenden Ansprüche, ***dadurch gekennzeichnet, dass*** sie formschlüssig und/oder kraftschlüssig in einem Lüftungsgitter befestigbar ist.

9. Befestigungsvorrichtung nach einem der vorhergehenden Ansprüche, ***dadurch gekennzeichnet, dass*** die Krallenposition fixierbar ist.

10. Befestigungsvorrichtung nach einem der vorhergehenden Ansprüche, ***dadurch gekennzeichnet, dass*** die Befestigungsvorrichtung zumindest teilweise mit PUR-Schaum beschichtet ist.

11. Befestigungsvorrichtung nach einem der vorhergehenden Ansprüche, ***dadurch gekennzeichnet, dass*** der PUR-Schaum eine Härte von 40 bis 60 ° Shore aufweist.

12. Befestigungsvorrichtung nach einem der vorhergehenden Ansprüche, ***dadurch gekennzeichnet, dass*** die Einstelleinrichtung einen Kugelkopf aufweist.

13. Verfahren zur Befestigung von Gegenständen in Fahrzeugen, bei dem eine Befestigungsvorrichtung nach dem Anspruch 1 in einem Lüfgtungsschacht lösbar angeordnet wird.

## Claims

1. A fastening device (1) for fastening objects to a ventilation grid in vehicles, with at least two fastening claws (2, 3) which are disposed on a mount (12), an adjustment device (15), with which the position of a fastening claw (2) relative to the mount can be adjusted, being disposed on the side of the mount (12) opposite to the fastening claws (2, 3), ***characterized in that*** when the adjusting lever (15) is displaced, the two fastening claws (2, 3) move apart or move together, one fastening claw (2) being displaceable together with the adjustment device (13), while the other fastening claw (3) has a fixed position.

2. The fastening device according to claim 1, ***characterized in that*** the fastening claw is mounted so that it is rotatable relative to the direction of motion of the fastening claw.

3. The fastening device according to one of the claims 1 or 2, ***characterized in that*** the fastening claw has several levers.

4. The fastening device according to claim 3, ***characterized in that*** the levers have teeth.

5. The fastening device according to claims 3 or 4, ***characterized in that*** the teeth are shaped differently.

6. The fastening device according to one of the afore-mentioned claims, ***characterized in that*** it has several fastening claws.

7. The fastening device according to claim 6, ***characterized in that*** the fastening claws are disposed opposite each other.

8. The fastening device according to one of the afore-mentioned claims, ***characterized in that*** it can be fastened in a ventilation grid by form and/or positive fitting.

9. The fastening device according to one of the afore-mentioned claims, ***characterized in that*** the position of the claws is fixable.

10. The fastening device according to one of the afore-mentioned claims, ***characterized in that*** the fastening device is at least partially coated with PUR foam.

11. The fastening device according to one of the afore-mentioned claims, ***characterized in that*** the PUR foam has a hardness of 40 to 60° Shore.

12. The fastening device according to one of the afore-mentioned claims, ***characterized in that*** the adjustment device has a ball-shaped head.

13. A method for fastening objects in vehicles, wherein a fastening device according to claim 1, is removably disposed in a ventilation shaft.

## Revendications

1. Dispositif de fixation (1) pour la fixation d'objets sur la grille d'aération d'un véhicule, avec au moins deux griffes de fixation (2, 3) disposées sur un support (12), un dispositif d'ajustement (15), par lequel la position d'une griffe de fixation (2) par rapport au support est ajustable, étant disposé sur le côté du support (12) opposé aux griffes de fixation (2, 3), ***caractérisé en ce que*** lorsque le levier de réglage (15) est déplacé, les griffes de fixation (2, 3) se séparent ou se rapprochent, l'une des griffes de fixation (2) étant déplaçable avec le dispositif d'ajustement (13), tandis que l'autre griffe de fixation (3) a une position fixe.

2. Dispositif de fixation selon la revendication 1, ***caractérisé en ce que*** la griffe de fixation est montée de manière pivotante par rapport à la direction du mouvement de la griffe de fixation.

3. Dispositif de fixation selon les revendications 1 ou 2, ***caractérisé en ce que*** la griffe de fixation comporte plusieurs leviers.

4. Dispositif de fixation selon la revendication 3, ***caractérisé en ce que*** les leviers comportent des dents.

5. Dispositif de fixation selon les revendications 3 ou 4, ***caractérisé en ce que*** les dents sont formées différemment.

6. Dispositif de fixation selon l'une quelconque des revendications précédentes, ***caractérisé en ce qu'***il comporte plusieurs griffes de fixation.

7. Dispositif de fixation selon la revendication 6, ***caractérisé en ce que*** les griffes de fixation sont disposées en face à face.

8. Dispositif de fixation selon l'une quelconque des revendications précédentes, ***caractérisé en ce qu'***il est susceptible d'être fixé sur une grille d'aération par engagement positif et/ou par liaison de force.

9. Dispositif de fixation selon l'une quelconque des revendications précédentes, ***caractérisé en ce que*** la position des griffes est fixable.

10. Dispositif de fixation selon l'une quelconque des revendications précédentes, ***caractérisé en ce que*** le dispositif de fixation est au moins partiellement recouvert d'une couche de mousse polyuréthane.

11. Dispositif de fixation selon l'une quelconque des revendications précédentes, ***caractérisé en ce que*** la mousse polyuréthane comporte une dureté de 40 à 60° Shore.

12. Dispositif de fixation selon l'une quelconque des revendications précédentes, ***caractérisé en ce que*** le dispositif d'ajustement comporte une tête sphérique.

13. Méthode de fixation d'objets dans un véhicule, par laquelle un dispositif de fixation selon la revendication 1 est disposé de manière détachable dans un puits d'aération.
